# EUROPÄISCHE PATENTSCHRIFT

(11) **EP 1 935 731 B1**
(45) Veröffentlichungstag und Bekanntmachung des Hinweises auf die Patenterteilung: **13.11.2013**
(21) Anmeldenummer: 07023264.0
(22) Anmeldetag: 30.11.2007
(51) Int. Cl.: B60S 5/06, B60K 1/04, B66F 9/075, B60L 11/18

(54) **Gabelstapler mit einer Führung zur seitlichen Batterieentnahme**
Fork lift truck with a guide for lateral removal of the battery
Empileuse à fourche dotée d'un guidage destiné au retrait latéral des batteries

(30) Priorität: 22.12.2006 DE 102006061071
(43) Veröffentlichungstag der Anmeldung: 25.06.2008
(73) Patentinhaber: STILL GmbH, 22113 Hamburg (DE)
(72) Erfinder: Bavendiek, Rainer, Dr., 21465 Wentorf (DE); Bergmann, Ansgar, 22941 Bargteheide (DE); Evert, Rainer, 22939 Rausdorf (DE); Lundelius, Jens, 22929 Schönberg (DE); Strugg, Gerald, 22761 Hamburg (DE)
(74) Vertreter: Geirhos, Johann

(56) Entgegenhaltungen:
- DE-A1-102005 022 094
- JP-A- 8 165 094
- JP-U- H0 549 441
- JP-U- 59 105 298

## Beschreibung

Die Erfindung betrifft ein Flurförderzeug, insbesondere Gabelstapler, mit einem Fahrzeugrahmen, der eine seitliche Entnahmeöffnung für einen Batterieblock aufweist, wobei für den Batterieblock eine Haltevorrichtung und mindestens eine ausschwenkbare Stützvorrichtung für die Haltevorrichtung vorgesehen ist, wobei die Haltevorrichtung mittels einer Führung zwischen einer Betriebsposition, in der sich die Haltevorrichtung vollständig innerhalb des Fahrzeugrahmens befindet, und einer Batteriewechselposition, in der sich die Haltevorrichtung vollständig außerhalb des Fahrzeugrahmens befindet, bewegbar ist, wobei die Stützvorrichtung mittels Federkraft und/oder Gewichtskraft von einer angehobenen in eine abgesenkte Stellung bewegbar ist und mindestens eine Vorrichtung zur selbsttätigen Arretierung der Stützvorrichtung in der abgesenkten Stellung vorgesehen ist.

Flurförderzeuge, insbesondere Gegengewichtsgabelstapler, sind vor allem in jüngerer Zeit häufig mit einer seitlichen Batterieentnahmeöffnung ausgeführt. Um den Batterieblock oder eine andere Energieversorgungseinheit, beispielsweise eine Brennstoffzelleneinheit, zu wechseln, wird der im Gabelstapler vorhandene Batterieblock in horizontaler Richtung aus dem Batteriefach des Gabelstaplers heraus bewegt.

Häufig ist es bei den Betreibern von Gabelstaplern üblich, die Batterieblöcke mittels eines Krans zu transportieren. Um dies bei Gabelstaplern mit einer seitlichen Batterieentnahmeöffnung zu ermöglichen, muss der Batterieblock zunächst vollständig aus dem Batteriefach heraus bewegt werden. Erst dann kann der Batterieblock an den Kran angehängt und angehoben werden. Analog hierzu kann während des Einsetzens in das Batteriefach der Batterieblock mittels des Krans nur neben die Entnahmeöffnung bewegt werden. Um den Batterieblock dann in horizontaler Richtung durch die Entnahmeöffnung in das Batteriefach zu bewegen, bedarf es einer Hilfsvorrichtung.

Hilfsvorrichtungen, die es erlauben, den Batterieblock ohne Zuhilfenahme eines Gabelhubwagens in horizontaler Richtung in das Batteriefach hinein oder aus dem Batteriefach heraus zu bewegen, sind im Stand der Technik bereits bekannt. In der DE 102 40 854 A1 ist beispielsweise beschrieben, unten im Batteriefach als Haltevorrichtung für die Batterie bei der Entnahme eine ausziehbare Rollenbahn anzuordnen. Nach dem Ausziehen der Rollenbahn kann der Batterieblock auf der Rollenbahn vollständig aus dem Batteriefach heraus gerollt werden.

Wenn sich die Batterie neben dem Flurförderzeug befindet, liegt ihr gesamtes Gewicht auf der Haltevorrichtung. Ist diese nur am Flurförderzeug befestigt, kann sich der Gesamtschwerpunkt des Fahrzeugs durch das außerhalb der Radbasis befindliche Gewicht der Batterie soweit verschieben, dass das Fahrzeug umzukippen droht. Zudem muss die Entnahmevorrichtung sehr stabil ausgeführt werden, um das Gewicht der Batterie auf das Flurförderzeug übertragen zu können. Daher ist es, beispielsweise aus der DE 10 2005 025 647, bekannt, eine an der Führungsvorrichtung angeordnete, auf eine Fahrbahnoberfläche schwenkbare Stützvorrichtung vorzusehen. Ist die Stützvorrichtung abgesenkt, stützt sich die Haltevorrichtung teilweise auf dieser ab, so dass das Flurförderzeug nicht mehr umkippen kann und Kräfte, die auf die Befestigung der Haltevorrichtung am Flurförderzeug wirken, reduziert werden.

Um den Vorgang weitestgehend zu automatisieren, Zeit einzusparen und die Bedienperson von körperlicher Arbeit zu entlasten, kann das Ausschwenken oder Ausfahren der Stützvorrichtung beispielsweise mittels einer Antriebsvorrichtung vorgenommen werden. Elektrische oder hydraulische Antriebsvorrichtungen sind jedoch aufwändig, benötigen eine Energieversorgung, sind fehleranfällig und schwierig zu warten.

Ein gattungsgemäßes Flurförderzeug ist aus der JP H05-49441 U bekannt.

Der Erfindung liegt daher die Aufgabe zugrunde, ein Flurförderzeug gemäß dem Oberbegriff des Anspruchs 1 zur Verfügung zu stellen, das einfach aufgebaut ist und bei dem eine Abstützung der Entnahmevorrichtung und des darauf angeordneten Batterieblocks mit einfachen Mitteln ermöglicht wird.

Diese Aufgabe wird erfindungsgemäß dadurch gelöst, dass die Vorrichtung zur Arretierung der Stützvorrichtung in der abgesenkten Stellung als Keilvorrichtung ausgebildet ist. Ein Federantrieb ist einfach aufgebaut, wartungsfrei, einfach gegen Überlastung abzusichern und kostengünstig herstellbar. Im Zusammenspiel von Gewichtskraft und Federkraft wird mit besonders hoher Sicherheit gewährleistet, dass die Stütze wirklich abgesenkt wird. Eine selbsttätige Arretierung in der abgesenkten Stellung ist dabei besonders vorteilhaft, weil so das Stützelement gegen unbeabsichtigtes Verschwenken, insbesondere Einfahren, abgesichert wird, ohne dass die Bedienperson durch Einsetzen oder Lösen der Arretierung eingreifen muss. Dabei sind Ausführungsformen zu bevorzugen, bei denen der Federantrieb die zur Arretierung erforderlichen Kräfte nicht oder nur zu geringen Teilen aufbringen muss. Die Vorrichtung zur Arretierung der Stützvorrichtung in der abgesenkten Stellung ist erfindungsgemäß als Keilvorrichtung ausgebildet. Keilvorrichtungen erlauben eine einfache Fixierung von beweglichen Teilen, bei denen sich die Stärke der Fixierung mit zunehmendem Weg erhöht. Eine Lösung der Fixierung ist mit geringem einmaligem Kraftaufwand und sehr kurzem Verstellweg möglich.

Weiterhin ist es von besonderem Vorteil, wenn die Keilvorrichtung so ausgebildet ist, dass die Kräfte zur Erzielung der Keilwirkung durch die Gewichtskraft der Batterie und/oder der Haltevorrichtung aufbringbar sind. Damit kann auf aufwändige Vorrichtungen, die die Kräfte zur Arretierung der Stützvorrichtung aufbringen, verzichtet werden. Bei zunehmendem Gewicht, beispielsweise bei Verwendung einer schwereren Batterie, wird auch die Arretierungswirkung erhöht. Die Kraft zum Lösen der Arretierung ist damit auch vom Gewicht der Batterie abhängig, so dass bei leichten Batterien keine unnötig großen Kräfte aufgebracht werden müssen.

Es ist zweckmäßig, wenn die ausschwenkbare Stützvorrichtung mindestens einen ersten, an der Haltevorrichtung schwenkbar angeordneten Gelenkarm mit einer an dem schwenkbar angeordneten Arm drehbar gelagerten Rolle aufweist. Eine Rolle ermöglicht eine problemlose seitliche Bewegung der Haltevorrichtung.

Es ist ebenfalls zweckmäßig, wenn die ausschwenkbare Stützvorrichtung mindestens einen zweiten Gelenkarm zwischen der Rolle und einer ersten parallel zur Ausschubrichtung bewegbaren Schubstange aufweist. Durch Bewegung der Schubstange ist die Rolle anheb- beziehungsweise absenkbar.

Indem die erste Schubstange ein erstes keilförmiges Element aufweist, dessen Keilspitze in die Bewegungsrichtung der Schubstange von der Rolle weg ausgerichtet ist, ist eine Bewegung der Schubstange in diese Richtung blockierbar und somit die Rolle in ihrer Position arretierbar.

Es ist weiterhin Vorteil, wenn eine zweite, parallel zur Ausschubrichtung bewegbare Schubstange vorgesehen ist, die ein zweites keilförmiges Element aufweist, das mit dem ersten keilförmigen Element in Eingriff bringbar ist. Durch Bewegung der Schubstangen in gegenläufige Richtungen ist die Keilvorrichtung und damit das Stützelement arretierbar.

Ebenso ist es vorteilhaft, wenn die keilförmigen Elemente in einer Führung mit vorzugsweise rechteckigem Querschnitt gelagert sind. Eine derartige Führung ist eine besonders einfache Möglichkeit, die keilförmigen Elemente sowohl zu führen als auch die Keilwirkung durch eine Kraft annähernd senkrecht zur Bewegungsrichtung der Schubstangen herbeizuführen.

Es ist ebenso vorteilhaft, wenn mindestens eine der Schubstangen, vorzugsweise die zweite Schubstange, mittels Federkraft entgegen der Ausschubrichtung der Batterie von einer vollständig eingeschobenen Position (Betriebsposition) in eine vollständig ausgeschobene Position (Batteriewechselposition) bewegbar ist. Damit ist eine besonders einfache Möglichkeit der Bewegung einer oder beider Schubstangen möglich, die als Antrieb für das Ausschwenken der Stützvorrichtung dient.

Weiterhin ist es von Vorteil, wenn mindestens eines der keilförmigen Elemente an der der Keilfläche abgewandten Seitenfläche ein wellenförmiges Profil aufweist und die Führung der keilförmigen Elemente an der der Seitenfläche zugewandten Fläche ein annähernd gleichartiges wellenförmiges Profil aufweist. Dadurch wird ein Verrutschen der Keile sowohl untereinander als auch gemeinsam in Relation zu der Führung zuverlässig verhindert.

Vorteilhafterweise weist die erste Schubstange, vorzugsweise an der Keilspitze des ersten keilförmigen Elements, einen Anschlag auf, an welchen ein Teil der zweiten Schubstange, vorzugsweise der der Keilspitze abgewandte Teil des zweiten keilförmigen Elements, durch eine entgegen der Keilwirkung gerichtete Relativbewegung der Schubstangen in Kontakt bringbar ist. Dadurch ist bei einer Bewegung, die zum Lösen der Keilwirkung führt, eine Mitnahme der ersten Schubstange durch die zweite Schubstange möglich, die beispielsweise zum Einschwenken der Stützvorrichtung führt.

Weitere Vorteile und Einzelheiten der Erfindung werden anhand des in den schematischen Figuren dargestellten Ausführungsbeispiels näher erläutert. Gleiche Teile sind mit gleichen Bezugszeichen gekennzeichnet. Dabei zeigt
- Figur 1: einen erfindungsgemäßen Gabelstapler in Seitenansicht,
- Figur 2: schematisch die Führung für die Haltevorrichtung in eingeschobener Stellung (Betriebsposition),
- Figur 3: schematisch die Führung für die Haltevorrichtung in teilweise ausgezogener Stellung,
- Figur 4: schematisch die Führung für die Haltevorrichtung in vollständig ausgezogener Stellung (Batteriewechselposition).

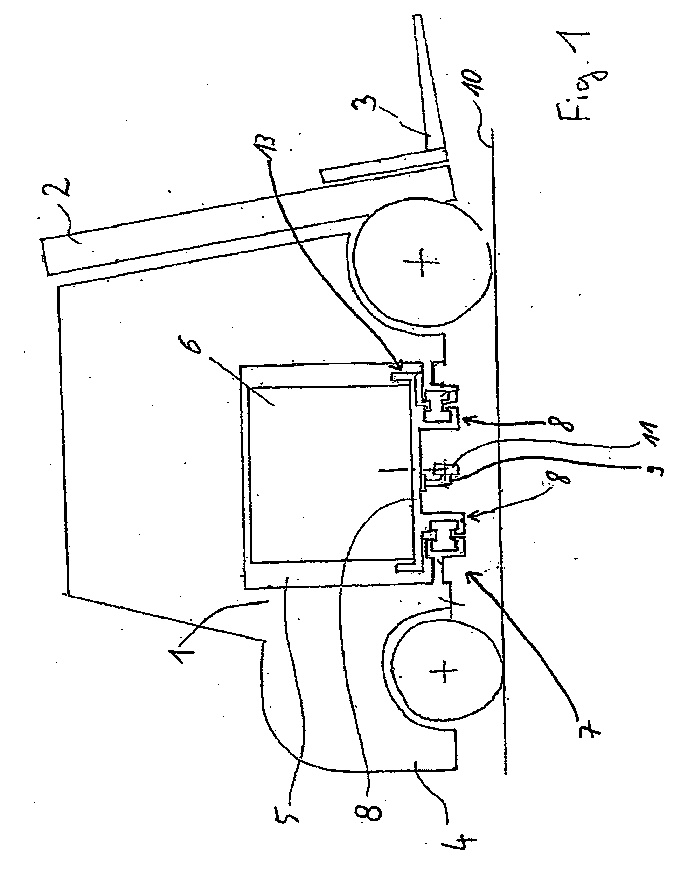

Figur 1 zeigt einen erfindungsgemäßen Gabelstapler in Seitenansicht. Das tragende Element des Gabelstaplers ist ein Fahrzeugrahmen 1. Vorne am Gabelstapler ist ein Hubgerüst 2 mit einem nach oben und unten bewegbaren Lastaufnahmemittel 3 befestigt. Am hinteren Ende des Gabelstaplers befindet sich ein Heckgewicht 4.

In einem Freiraum des Fahrzeugrahmens befindet sich ein seitlich offenes Batteriefach 5, in dem ein Batterieblock 6 angeordnet ist. Der Batterieblock 6 steht auf einer Haltevorrichtung 7 auf, welche mittels einer teleskopischen Führung 8 in seitlicher Richtung aus dem Batteriefach 5 heraus bewegt werden kann.

An der Haltevorrichtung 7 ist eine ausschwenkbare Stützevorrichtung 9 befestigt. Solange sich die Haltevorrichtung 7 in der Betriebsposition innerhalb des Fahrzeugrahmens 1 befindet, ist die Stützvorrichtung 9 eingeschwenkt und befindet sich innerhalb der Fahrzeugkontur. Sobald die Stützvorrichtung 9 aus dem Fahrzeug heraus bewegt wird, wird sie selbsttätig ausgeschwenkt und stützt die Gewichtskraft des Batterieblocks 6 direkt an der Fahrbahn 10 ab. Am unteren Ende der Stützvorrichtung 9 befindet sich eine Rolle 11, die während der Ausfahrbewegung auf der Fahrbahn 10 abrollt.

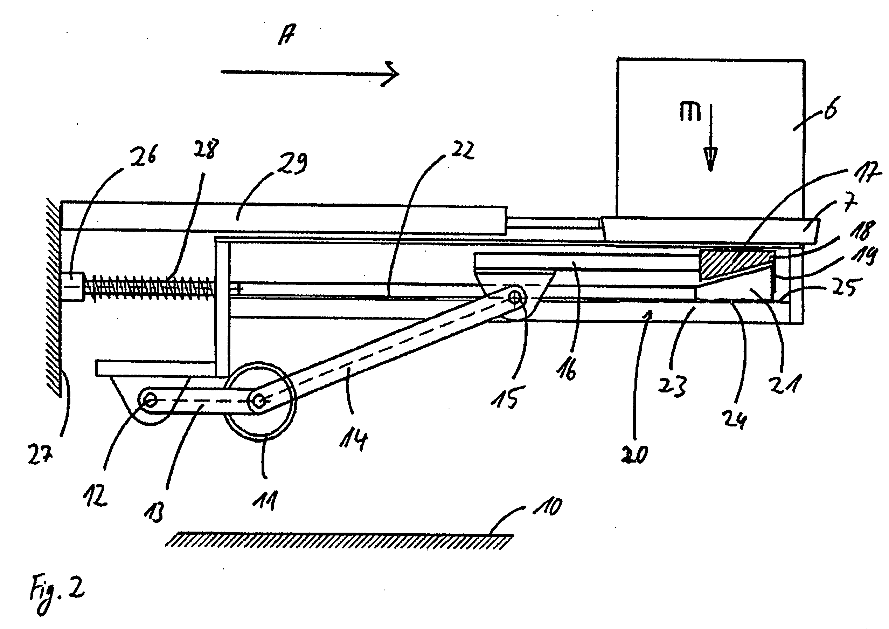

In Figur 2 ist schematisch die Führung 8 der eingeschobenen Haltevorrichtung 7 in Seitenansicht dargestellt. An der Haltevorrichtung 7 mit der Batterie 6 ist über ein Gelenk 12 und einen ersten Gelenkarm 13 die Rolle 11 befestigt. Ein zweiter Gelenkarm 14 und ein Gelenk 15 verbinden die Rolle 11 mit einer ersten Schubstange 16, die in Relation zu der Haltevorrichtung 7 parallel zur Ausschubrichtung A der Batterie 6 beweglich gelagert ist. Am Ende der ersten Schubstange 16 ist ein erstes Keilelement 17 angeordnet, dessen Spitze 18 in Bewegungsrichtung A der Schubstange 16 gesehen von der Rolle 11 wegzeigt. An der Spitze 18 des ersten Keilelements 17 ist ein Anschlag 19 angebracht.

Die erfindungsgemäße Keilvorrichtung 20 umfasst weiterhin ein zweites Keilelement 21, das an einer zweiten Schubstange 22 angebracht ist. Geführt werden die beiden Keilelemente 17, 21 in einer Führung 23 mit rechteckigem Querschnitt, die an der Haltevorrichtung 7 befestigt ist. Die Unterseite 24 des zweiten Keilelements 21 weist ein wellenförmiges Profil auf. Die der Unterseite 24 des zweiten Keilelements zugewandte Seite 25 der Führung 23 weist ein annähernd identisches Profil auf. Dies bewirkt, dass Bewegungen des zweiten Keilelements 21 in Relation zu der Führung 23 bei Eintreten der Keilwirkung zuverlässig unterbunden werden.

An der dem zweiten Keilelement 21 abgewandten Seite der zweiten Schubstange 22 ist ein Anschlag 26 angeordnet, der in der Betriebsposition der Haltevorrichtung 7 an einem fest mit dem Rahmen 1 des Flurförderzeugs verbundenen Bauteil, beispielsweise einer Wand 27 des Batteriefachs 5, in Kontakt steht. Zwischen Anschlag 26 und Haltevorrichtung 7 ist auf der zweiten Schubstange 22 eine Schraubenfeder 28 angeordnet. Die Schraubenfeder 28 ist bei eingeschobener Haltevorrichtung 7 (Betriebsposition) maximal komprimiert. Mittels eines doppeltwirkenden Hydraulikzylinders 29, der zwischen dem Rahmen 1 des Flurförderzeugs und der Haltevorrichtung 7 angebracht ist, kann die Haltevorrichtung 7 seitwärts in Richtung des Pfeils A aus dem Flurförderzeug herausbewegt werden.

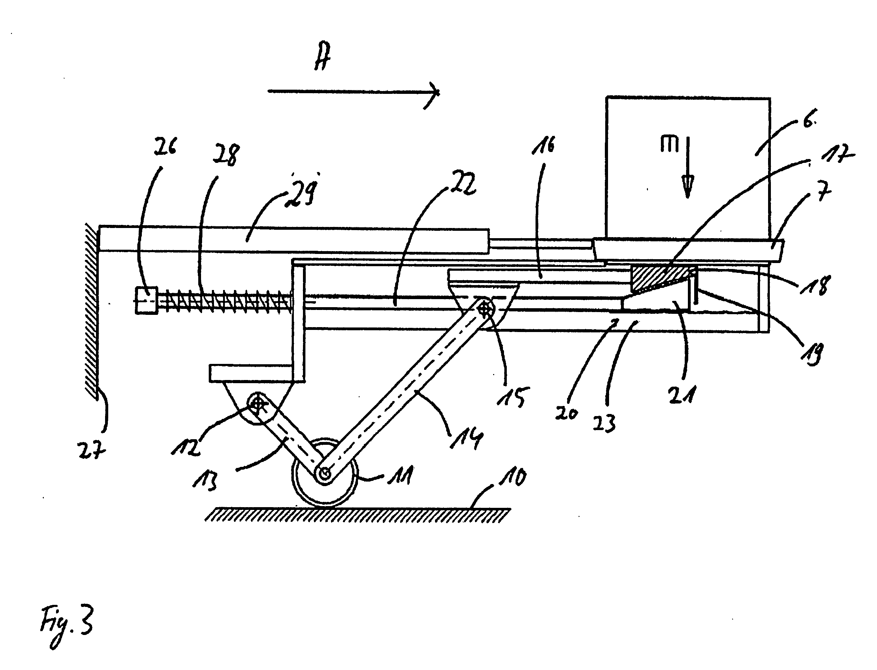

Der teilweise ausgeschobene Zustand (Batteriewechselposition) ist in Figur 3 dargestellt. Beim Ausschieben der Haltevorrichtung 7 wird die Haltevorrichtung 7 von der Wand 27 des Batteriefachs 5 wegbewegt. Durch die Federkraft der Feder 28 wird die zweite Schubstange 22 entgegen der Entnahmerichtung A bewegt und das zweite Keilelement 21 gelangt in Kontakt zum ersten Keilelement 17. Da die Stützrolle 11 unbelastet ist, können die Keilelemente 17, 21 leicht in der Führung 23 gleiten und das Gelenk 15 wird ebenfalls entgegen der Entnahmerichtung A bewegt. Dadurch wird über den zweiten Gelenkarm 14 die Rolle 11 nach unten gedrückt, bis diese in Kontakt mit der Fahrbahn 10 kommt. Durch den Bodenkontakt der Rolle 11 wird ein Teil der Gewichtskraft der Batterie 6 über die Rolle 11 auf die Fahrbahn 10 übertragen. Dadurch wird der Gelenkarm 14 in Entnahmerichtung A geschoben und zwischen den Keilelementen 17, 21 tritt die Keilwirkung ein. Aufgrund der wellenförmigen Oberflächen 24, 25 greifen diese ineinander und verhindern zuverlässig eine weitere Bewegung des zweiten Keilelements 21 in Relation zu der Führung 23 und damit der Haltevorrichtung 7. Damit wird die Haltevorrichtung 7 während des weiteren Ausfahrvorgangs sicher durch die Rolle 11 auf der Fahrbahn 10 abgestützt und das Flurförderzeug entlastet.

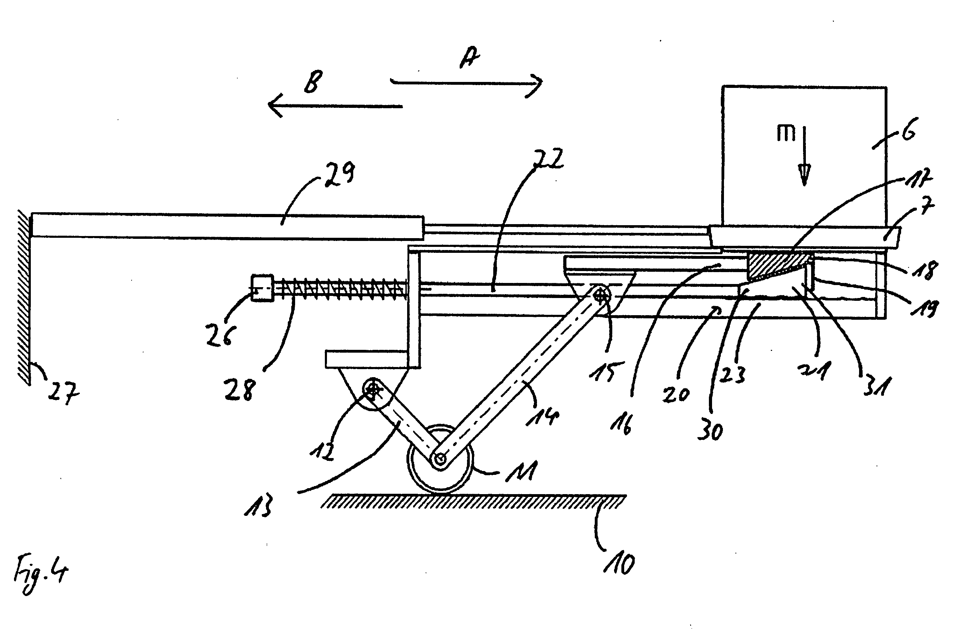

Der ausgeschobene Zustand (Batteriewechselposition) ist in Figur 4 dargestellt. Der Großteil der Last der Batterie 6 wirkt nun auf die Rolle 11.

Beim Einfahren der Haltevorrichtung 7 rollt die Rolle 11 ebenfalls auf der Fahrbahn 10 ab und stützt so die Haltevorrichtung 7 bis die Last von der Führung 8 übernommen wird und der Anschlag 26 in Kontakt mit der Wand 27 des Batteriefachs 5 kommt. Die zweite Schubstange 22 wird entgegen der Bewegungsrichtung B der Haltevorrichtung 7 gedrückt, so dass die Keilwirkung der Keilelemente 17, 21 aufgehoben wird und die zweite Schubstange 22 mit der der Spitze 30 des zweiten Keilelements 21 abgewandten Seite 31 gegen den Anschlag 19 an der Spitze 18 des ersten Keilelements 17 stößt. Dadurch drückt die zweite Schubstange 22 nun auch die erste Schubstange 16 und das damit verbundene Gelenk 15 in Entnahmerichtung A, wodurch der zweite Schwenkarm 14 nach oben geschwenkt wird und die Rolle 11 in die Betriebsposition angehoben wird.

Die gezeigte Anordnung zeichnet sich sowohl durch ihren einfachen Aufbau aus, der das Ein- und Ausschwenken der Rolle 11 alleine durch die Kraft des Hydraulikzylinders 29 beziehungsweise der Feder 28 ermöglicht, als auch darin, dass auch bei unterschiedlichen Abständen der Haltevorrichtung 7 von der Fahrbahn 10, wie sie sich beispielsweise aufgrund des Abnutzungsgrades der Fahrzeugreifen oder Unebenheiten der Fahrbahn 10 ergeben können, die Rolle 11 sicher ausgefahren und arretiert wird. Verringert sich beispielsweise der Abstand der Haltevorrichtung 7 von der Fahrbahn 10 aufgrund von Reifenverschleiß, so trifft die Rolle 11 früher auf der Fahrbahn 10 auf und löst damit früher eine Arretierung durch Blockieren der Keilvorrichtung 20 aus. Aufwändige Antriebsvorrichtungen für das Ausschwenken der Rolle 11 sowie Sensoren, die das Aufsetzen der Rolle 11 auf der Fahrbahn 10 detektieren, können so eingespart werden.

Selbstverständlich sind auch andere Ausführungsformen der Erfindung denkbar, indem beispielsweise die Schubstangen 16, 22 nicht übereinander sonder nebeneinander angeordnet werden und somit auch die Keilvorrichtung 20 praktisch um 90 ° gedreht eingebaut ist, was einen besonders flachen Aufbau ergibt. Anstelle der einzelnen Rolle 11 könne auch andere Mittel verwendet werden ,die eine einfache Bewegung der Stützvorrichtung 9 über den Boden erlauben, beispielsweise in Form eines Gleitelements oder mehrerer Rollen, die entweder nebeneinander oder linear angeordnet werden können. Anstelle des Hydraulikzylinders 29 ist selbstverständlich auch ein anderer Antrieb für den Ausschub denkbar.

## Patentansprüche

1. Flurförderzeug, insbesondere Gabelstapler, mit einem Fahrzeugrahmen (1), der eine seitliche Entnahmeöffnung für einen Batterieblock (6) aufweist, wobei für den Batterieblock (6) eine Haltevorrichtung (7) und mindestens eine ausschwenkbare Stützvorrichtung (9) für die Haltevorrichtung (7) vorgesehen ist, wobei die Haltevorrichtung (7) mittels einer Führung (8) zwischen einer Betriebsposition, in der sich die Haltevorrichtung (7) vollständig innerhalb des Fahrzeugrahmens (1) befindet, und einer Batteriewechselposition, in der sich die Haltevorrichtung (7) vollständig außerhalb des Fahrzeugrahmens (1) befindet, bewegbar ist, wobei die Stützvorrichtung (9) mittels Federkraft und/oder Gewichtskraft von einer angehobenen in eine abgesenkte Stellung bewegbar ist und mindestens eine Vorrichtung (20) zur selbsttätigen Arretierung der Stützvorrichtung (9) in der abgesenkten Stellung vorgesehen ist, **dadurch gekennzeichnet, dass** die Vorrichtung (20) zur Arretierung der Stützvorrichtung (9) in der abgesenkten Stellung als Keilvorrichtung (20) ausgebildet ist.

2. Flurförderzeug nach Anspruch 1 , **dadurch gekennzeichnet, dass** die Keilvorrichtung (20) derart ausgebildet ist, dass die Kräfte zur Erzielung der Keilwirkung durch die Gewichtskraft der Batterie (6) und/oder der Haltevorrichtung (7) aufbringbar sind.

3. Flurförderzeug nach Anspruch 1 oder 2, **dadurch gekennzeichnet, dass** die ausschwenkbare Stützvorrichtung (9) mindestens einen ersten, an der Haltevorrichtung (7) schwenkbar angeordneten Gelenkarm (13) mit einer an dem schwenkbar angeordneten Gelenkarm (13) drehbar gelagerten Rolle (11) aufweist.

4. Flurförderzeug nach Anspruch 3, **dadurch gekennzeichnet, dass** die ausschwenkbare Stützvorrichtung (9) mindestens einen zweiten Gelenkarm (14) zwischen der Rolle (11) und einer ersten parallel zur Ausschubrichtung A bewegbaren Schubstange (16) aufweist.

5. Flurförderzeug nach Anspruch 4, **dadurch gekennzeichnet, dass** die erste Schubstange (16) ein erstes keilförmiges Element (17) aufweist, dessen Keilspitze (18) in die Bewegungsrichtung der Schubstange (16) von der Rolle (11) weg ausgerichtet ist.

6. Flurförderzeug nach Anspruch 5, **dadurch gekennzeichnet, dass** eine zweite, parallel zur Ausschubrichtung bewegbare Schubstange (22) vorgesehen ist, die ein zweites keilförmiges Element (21) aufweist, das mit dem ersten keilförmigen Element (17) in Eingriff bringbar ist.

7. Flurförderzeug nach Anspruch 5 oder 6, **dadurch gekennzeichnet, dass** die keilförmigen Elemente (17, 21) in einer Führung (20) mit vorzugsweise rechteckigem Querschnitt gelagert sind.

8. Flurförderzeug nach einem der Ansprüche 4 bis 7, **dadurch gekennzeichnet, dass** mindestens eine der Schubstangen (16, 22), vorzugsweise die zweite Schubstange (22), mittels Federkraft entgegen der Ausschubrichtung der Batterie (6) von einer vollständig eingeschobenen Position (Betriebsposition) in eine vollständig ausgeschobene Position (Batteriewechselposition) bewegbar ist.

9. Flurförderzeug nach einem der Ansprüche 5 bis 8, **dadurch gekennzeichnet, dass** mindestens eines der keilförmigen Elemente (17, 21) an der der Keilfläche abgewandten Seitenfläche (24) ein wellenförmiges Profil aufweist und die Führung (23) der keilförmigen Elemente (17, 21) an der der Seitenfläche zugewandten Fläche (25) ein annähernd gleichartiges wellenförmiges Profil aufweist.

10. Flurförderzeug nach einem der Ansprüche 4 bis 9, **dadurch gekennzeichnet, dass** die erste Schubstange (16), vorzugsweise an der Keilspitze (18) des ersten keilförmigen Elements (17), einen Anschlag (19) aufweist, an welchen ein Teil der zweiten Schubstange (22), vorzugsweise der der Keilspitze (30) abgewandte Teil (31) des zweiten keilförmigen Elements (21), durch eine entgegen der Keilwirkung gerichtete Relativbewegung der Schubstangen (17, 22) in Kontakt bringbar ist.

## Claims

1. Industrial truck, in particular fork-lift truck, with a vehicle frame (1), which has a lateral removal opening for a battery pack (6), wherein a holding apparatus (7) and at least one supporting apparatus (9), which can be pivoted outwards, for the holding apparatus (7) is provided for the battery pack (6), wherein the holding apparatus (7) is movable by means of a guide (8) between an operating position, in which the holding apparatus (7) is located completely within the vehicle frame (1), and a battery replacement position, in which the holding apparatus (7) is located completely outside of the vehicle frame (1), wherein the supporting apparatus (9) is movable by means of spring force and/or force due to weight from a raised position to a lowered position, and at least one apparatus (20) for independent locking of the supporting apparatus (9) in the lowered position is provided, **characterized in that** the apparatus (20) for locking the supporting apparatus (9) in the lowered position is in the form of a wedge-type apparatus (20).

2. Industrial truck according to Claim 1, **characterized in that** the wedge-type apparatus (20) is formed in such a way that the forces for achieving the wedge effect can be applied by the force due to weight of the battery (6) and/or the holding apparatus (7).

3. Industrial truck according to Claim 1 or 2, **characterized in that** the supporting apparatus (9) which can be pivoted outwards has at least one first articulated arm (13), which is arranged pivotably on the holding apparatus (7) and which has a roller (11) mounted rotatably on the pivotably arranged articulated arm (13).

4. Industrial truck according to Claim 3, **characterized in that** the supporting apparatus (9) which can be pivoted outwards has at least one second articulated arm (14) between the roller (11) and a first push rod (16) which is movable parallel to the push-out direction A.

5. Industrial truck according to Claim 4, **characterized in that** the first push rod (16) has a first wedge-shaped element (17), the wedge tip (18) of said wedge-shaped element being directed away from the roller (11) in the movement direction of the push rod (16).

6. Industrial truck according to Claim 5, **characterized in that** a second push rod (22) is provided which is capable of moving parallel to the push-out direction and which has a second wedge-shaped element (21), which can be brought into engagement with the first wedge-shaped element (17).

7. Industrial truck according to Claim 5 or 6, **characterized in that** the wedge-shaped elements (17, 21) are mounted in a guide (20) with a preferably rectangular cross section.

8. Industrial truck according to one of Claims 4 to 7, **characterized in that** at least one of the push rods (16, 22), preferably the second push rod (22), is movable from a completely pushed-in position (operating position) into a completely pushed-out position (battery replacement position) by means of spring force counter to the push-out direction of the battery (6).

9. Industrial truck according to one of Claims 5 to 8, **characterized in that** at least one of the wedge-shaped elements (17, 21) has a corrugated profile on the side face (24) facing away from the wedge face, and the guide (23) of the wedge-shaped elements (17, 21) has an approximately identical corrugated profile on the face (25) facing the side face.

10. Industrial truck according to one of Claims 4 to 9, **characterized in that** the first push rod (16) has a stop (19), preferably at the wedge tip (18) of the first wedge-shaped element (17), wherein part of the second push rod (22), preferably that part (31) of the second wedge-shaped element (21) which faces away from the wedge tip (30), can be brought into contact with said stop by means of a relative movement of the push rods (16, 22) in the opposite direction to the wedge effect.

## Revendications

1. Chariot de manutention, en particulier chariot élévateur à fourche, comprenant un châssis de véhicule (1) qui présente une ouverture d'enlèvement latérale pour un bloc batterie (6), un dispositif de fixation (7) et au moins un dispositif de support (9) pouvant être sorti par pivotement pour le dispositif de fixation (7) étant prévus pour le bloc batterie (6), le dispositif de fixation (7) pouvant être déplacé au moyen d'un guidage (8) entre une position fonctionnelle dans laquelle le dispositif de fixation (7) se trouve complètement à l'intérieur du châssis de véhicule (1) et une position de changement de batterie dans laquelle le dispositif de fixation (7) se trouve complètement à l'extérieur du châssis de véhicule (1), le dispositif de support (9) pouvant être déplacé au moyen d'une force de ressort et/ou d'une force de pesanteur depuis une position soulevée dans une position abaissée et au moins un dispositif (20) pour le blocage automatique du dispositif de support (9) dans la position abaissée étant prévu, **caractérisé en ce que** le dispositif (20) pour le blocage du dispositif de support (9) dans la position abaissée est réalisé sous forme de dispositif de calage (20).

2. Chariot de manutention selon la revendication 1, **caractérisé en ce que** le dispositif de calage (20) est réalisé de telle sorte que les forces pour produire l'effet de calage puissent être appliquées par la force de pesanteur de la batterie (6) et/ou du dispositif de fixation (7).

3. Chariot de manutention selon la revendication 1 ou 2, **caractérisé en ce que** le dispositif de support (9) pouvant être sorti par pivotement présente au moins un premier bras articulé (13) disposé de manière à pouvoir pivoter sur le dispositif de fixation (7), avec un rouleau (11) monté de manière rotative sur le bras articulé (13) disposé de manière pivotante.

4. Chariot de manutention selon la revendication 3, **caractérisé en ce que** le dispositif de support (9) pouvant être sorti par pivotement présente au moins un deuxième bras articulé (14) entre le rouleau (11) et une première tige poussoir (16) déplaçable parallèlement à la direction de sortie A.

5. Chariot de manutention selon la revendication 4, **caractérisé en ce que** la première tige poussoir (16) présente un premier élément en forme de cale (17) dont la pointe de cale (18) est orientée dans la direction du déplacement de la tige poussoir (16) à l'écart du rouleau (11).

6. Chariot de manutention selon la revendication 5, **caractérisé en ce qu'**il est prévu une deuxième tige poussoir (22) déplaçable parallèlement à la direction de sortie, laquelle présente un deuxième élément en forme de cale (21) qui peut être amené en prise avec le premier élément en forme de cale (17).

7. Chariot de manutention selon la revendication 5 ou 6, **caractérisé en ce que** les éléments en forme de cale (17, 21) sont montés dans un guide (20) de section transversale de préférence rectangulaire.

8. Chariot de manutention selon l'une quelconque des revendications 4 à 7, **caractérisé en ce qu'**au moins l'une des tiges poussoir (16, 22), de préférence la deuxième tige poussoir (22), peut être déplacée au moyen de la force de ressort à l'encontre de la direction de sortie de la batterie (6) d'une position complètement rentrée (position fonctionnelle) dans une position complètement sortie (position de changement de batterie).

9. Chariot de manutention selon l'une quelconque des revendications 5 à 8, **caractérisé en ce qu'**au moins l'un des éléments en forme de cale (17, 21) présente, sur la surface latérale (24) opposée à la surface de calage, un profilé de forme ondulée et le guidage (23) des éléments en forme de cale (17, 21) sur la surface (25) tournée vers la surface latérale présente un profilé de forme ondulé approximativement identique.

10. Chariot de manutention selon l'une quelconque des revendications 4 à 9, **caractérisé en ce que** la première tige poussoir (16), de préférence au niveau de la pointe de cale (18) du premier élément en forme de cale (17), présente une butée (19) au niveau de laquelle une partie de la deuxième tige poussoir (22), de préférence la partie (31) du deuxième élément en forme de cale (21) opposée à la pointe de cale (30), peut être amenée en contact par un mouvement relatif des tiges poussoir (16, 22) orienté en sens inverse de l'effet de cale.
